# EUROPÄISCHE PATENTSCHRIFT

(11) **EP 0 387 659 B1**
(45) Veröffentlichungstag und Bekanntmachung des Hinweises auf die Patenterteilung: **19.10.1994**
(21) Anmeldenummer: 90104225.9
(22) Anmeldetag: 05.03.1990
(51) Int. Cl.: C09K 3/30

(54) **Mischung für einen Wasser enthaltenden Aerosollack sowie Aerosollack**
Mixture for a water containing aerosol lacquer and this aerosol lacquer
Mélange pour vernis aqueux en aérosol et ce vernis en aérosol

(30) Priorität: 16.03.1989 CH 967/89
(43) Veröffentlichungstag der Anmeldung: 19.09.1990
(73) Patentinhaber: Machunsky, Franz Dieter, CH-5036 Oberentfelden (CH)
(72) Erfinder: Machunsky, Franz Dieter, CH-5036 Oberentfelden (CH)
(74) Vertreter: Zink, Markus, Dr.

(56) Entgegenhaltungen:
- EP-A- 0 051 919
- US-A- 4 365 028
- ENCYCLOPEDIA OF POLYMER SCIENCE AND ENGINEERING, VOL.1, 674-6, JOHN WILEY & SONS, 1985

## Beschreibung

Die vorliegende Erfindung betrifft eine Mischung für einen Wasser enthaltenden Aerosollack. Sie betrifft auch einen Aerosollack.

In der DE PS 31 38 298 wird eine Aerosolanstrichzusammensetzung beschrieben. Diese Zusammensetzung enthält u.a. ein wasserlösliches, polares organisches Lösungsmittel. Es ist anzunehmen, dass beim Applizieren einer solchen Zusammensetzung, welche als Lösung vorliegt, ein Grossteil des Lösungsmittels während des Aufsprayens verdampft, und dass der Rest des Lösungsmittels azeotrop zusammen mit dem Wasser verdampft.

Sprüht man eine solche Zusammensetzung in eine brennende Kerze, so entsteht ein Feuerball. Wenn der Anteil des organischen Lösungsmittels in der Zusammensetzung so stark reduziert wird, dass beim Sprühen in eine brennende Kerze kein Feuerball mehr entsteht, so hat eine solche Zusammensetzung aber derart schlechte Eigenschaften, dass sie bei der Anwendung auf eine senkrecht stehende Oberfläche von dieser in unbrauchbarer Weise herunterläuft.

Die deutsche Qualitätseinstufung "blauer Engel" sagt im Prinzip aus, wieviel organische Amine und organische Lösungsmittel in einer Farbe maximal enthalten sein dürfen. Mit der oben genannten Aerosolanstrichzusammensetzung kann diese Qualitätseinstufung nicht erreicht werden. Ebenso müssen bei der Lagerung des genannten Produktes spezielle Sicherheitsvorkehrungen getroffen werden. Die genannte Zusammensetzung kann auch nicht auf Polystyrol-Unterlagen aufgetragen werden.

In Encyclopedia of Polymer Sciene and Engineering, Band 1, seite 674-6, Verlag J. Wiley, 1985, werden wasser lösliche Alkydharze und diese enthaltende Wasserfarben beschrieben.

Es ist eine Aufgabe der Erfindung, diesen unzureichenden Stand der Technik zu überwinden.

Es soll eine Wasserfarbe zur Verfügung gestellt werden, welche mit dem Treibmittel Dimethylaether verträglich ist und welche mit diesem Treibmittel versprayt werden kann.

Die Erfindung ist durch die Merkmale in den unabhängigen Ansprüchen gekennzeichnet. Bevorzugte Ausführungsformen sind in den abhängigen Ansprüchen gekennzeichnet.

Die erfindungsgemässe Mischung kann wie folgt hergestellt werden:
Man legt die 3 Bestandteile Alkydharz, vorzugsweise ein 75%-iges Alkydharz in einem Butylglykol/Butanolgemisch, Netzmittel und wasserunlösliches, apolares organisches Lösungsmittel vor und verteilt darin fein (dispergiert) die Pigmente, beispielsweise in einem Dreiwalzenstuhl. Danach wird mit Ammoniak oder einem organischen Amin ein alkalischer pH-Wert eingestellt, beispielsweise ein pH-Wert von 9, damit diese Mischung mit Wasser verdünnbar wird. Es wäre auch möglich, zu Beginn ein Alkydharz mit einem basischen pH-Wert vorzulegen, doch wäre dies unwirtschaftlich, müsste doch ein grösseres Volumen dispergiert werden.

Danach werden nacheinander der Trockenstoff und das Wasser hinzugefügt. Wenn das Wasser zur Mischung gegeben ist, liegt im Prinzip eine Emulsion vor. Weitere fakultative Komponenten, wie Antihautmittel, Antiabsetzmittel und Acrylverdickungsmittel können hinzugegeben werden.

Die fertige, erfindungsgemässe Mischung kann auf bekannte Art mit dem Treibmittel Dimethylaether versetzt und in Aerosoldosen abgefüllt werden.

Ein solcher erfindungsgemässer Aerosollack kann auf alle Unterlagen, einschliesslich solche aus Polystyrol, gesprayt werden. Die Staubtrockenzeit beträgt ca. 30 Minuten. Die Farbe ist nach etwa 3 bis 5 Stunden griffest.

Die erfindungsgemässe Mischung ist vorwiegend geruchlos, nicht brennbar und nach schweizerischen Gesetzen betreffend die Giftigkeit nicht kennzeichnungspflichtig.

Beim Applizieren des erfindungsgemässen Aerosollackes, welcher nach dem Aufsprayen mehr oder weniger die Form einer Emulsion hat, verdampft das Wasser langsam mit dem wasserunlöslichen, apolaren Lösungsmittel. Sprüht man eine solche Zusammensetzung in eine brennende Kerze, so entsteht kein Feuerball.

Die erfindungsgemässen Produkte können einfach und ohne speziellen Sicherheitsvorkehrungen - auch in Warenhäusern - gelagert werden. Die erfindungsgemässen Produkte haben die deutsche Qualitätseinstufung "blauer Engel" erhalten.

Die nachfolgenden Beispiele dienen der Illustration der Erfindung.

### Beispiel 1

| Aerosollack weiss | |
|---|---|
| Kelsol 3902 A, 75% in Butylglykol/Butanol | 25,0 Teile |
| Netzmittel Borchigen ND | 0,2 Teile |
| Solvent-Naphtha | 4,0 Teile |
| Titandioxyd Tiofine R 85 | 15,0 Teile |
| Dispergieren auf Dreiwalzenstuhl und danach zusetzen: | |
| Triethylamin | 1,0 Teil |
| Sol. Co Naphthenat | 0,3 Teile |
| Metoxim 100 | 0,1 Teil |
| Wasser | 53,9 Teile |
| Viscalex VG 2 | 0,5 Teile |

### Beispiel 2

| Aerosollack schwarz | |
|---|---|
| Kelsol 3902 A, 75% in Butylglykol/Butanol | 25,0 Teile |
| Netzmittel Borchigen ND | 0,2 Teile |
| Solvent-Naphtha | 4,0 Teile |
| Russ | 1,5 Teile |
| Bariumsulfat | 13,0 Teile |
| Dispergieren auf Dreiwalzenstuhl und danach zusetzen: | |
| Triethylamin | 1,0 Teil |
| Sol. Co. Naphthenat | 0,3 Teile |
| Metoxim 100 | 0,1 Teil |
| Wasser | 54,4 Teile |
| Viscalex VG 2 | 0,5 Teile |

### Beispiel 3

| Aerosollack rot | |
|---|---|
| Kelsol 3902 A, 75% in Butylglykol/Butanol | 25,0 Teile |
| Netzmittel Borchigen ND | 0,2 Teile |
| Solvent-Naphtha | 4,0 Teile |
| Sico-Echtrot L 3855 | 3,0 Teile |
| Bariumsulfat | 10,0 Teile |
| Dispergieren auf Dreiwalzenstuhl und danach zusetzen: | |
| Triethylamin | 1,0 Teil |
| Sol. Co Naphthenat | 0,3 Teile |
| Metoxim 100 | 0,1 Teil |
| Wasser | 55,9 Teile |
| Viscalex VG 2 | 0,5 Teile |

## Patentansprüche

1. Mischung für einen Wasser enthaltenden Aerosollack, auch Aerosolfarbe oder Wasserfarbe genannt, dadurch gekennzeichnet, dass sie die folgenden Bestandteile enthält:
- wenigstens ein mit Wasser verdünnbares Alkydharz, welches (welche) einen pH-Wert von 8 bis 9 aufweist (aufweisen),
- wenigstens ein Netzmittel,
- wenigstens ein mit Wasser nicht mischbares, also wasserunlösliches apolares organisches Lösungsmittel in einer solchen Menge, dass diese(s) Lösungsmittel gleichzeitig auch als Antischaummittel dient (dienen) und ausgewählt ist aus der Gruppe, bestehend aus einem Aliphaten und einem Aromaten,
- wenigstens ein Pigment,
- wenigstens einen Trockenstoff für das genannte Alkydharz, und
- Wasser.

2. Mischung nach Anspruch 1, dadurch gekennzeichnet, dass die genannten Bestandteile in folgenden Mengen enthalten sind:
- 10 bis 40 Gew.-%, insbesondere 20 bis 25 Gew.-%, Alkydharz,
- 0,2 bis 0,5 Gew.-% Netzmittel,
- 2 bis 10 Gew.-%, insbesondere 7 Gew.-%, Lösungsmittel,
- 10 bis 30 Gew.-%, insbesondere 15 Gew.-%, Pigment,
- 0,05 bis 0,5 Gew.-%, insbesondere 0,03 Gew.-%, Trockenstoff, vorzugsweise Co-, Ca- oder Zr-Verbindungen, wie etwa Co-Naphthinate, und
- 40 bis 70 Gew.-%, insbesondere 50 bis 60 Gew.-%, vorzugsweise 60 Gew.-%, Wasser,
jeweils bezogen auf das Gesamtgewicht der Mischung.

3. Mischung nach einem der Ansprüche 1 bis 2, dadurch gekennzeichnet, dass sie zusätzlich noch die folgenden Bestandteile enthält:
- wenigstens ein Antihautmittel, vorzugsweise in einer Menge von 0,1 bis 0,2 Gew.-%, und/oder
- wenigstens ein Antiabsetzmittel, z.B. Kieselgur, vorzugsweise in einer Menge von 0,3 bis 0,5 Gew.-%, und/oder
- wenigstens ein Acrylverdickungsmittel, vorzugsweise in einer Menge von 0,3 bis 0,5 Gew.-%, und/oder
- wenigstens eine Füllstoff, z.B. Bariumsulfat, Calciumcarbonat,
wobei sich die Prozentangaben auf das Gesamtgewicht der Mischung beziehen.

4. Mischung nach einem der Ansprüche 1 bis 3, dadurch gekennzeichnet, dass der genannte pH-Wert der Alkydharze eingestellt ist mit Hilfe von Ammoniak oder Aminen, wie etwa Triethylamin, Dimethyläthanolamin.

5. Mischung nach einem der Ansprüche 1 bis 4, dadurch gekennzeichnet, dass das Netzmittel Lecithin oder ein Lecithin enthaltendes Material oder ein anderes im Handel erhältliches Netzmittel ist.

6. Mischung nach einem der Ansprüche 1 bis 5, dadurch gekennzeichnet, dass das wasserunlösliche, apolare organische Lösungsmittel, welches gleichzeitig auch als Antischaummittel dient, ausgewählt ist aus der Gruppe, bestehend aus Benzin, Solvent-Naphtha und Trimethylbenzol.

7. Mischung nach einem der Ansprüche 1 bis 6, dadurch gekennzeichnet, dass das Pigment TiO₂, Russ oder ein buntes, organisches Pigment ist, wie etwa Azopigmente oder Diazopigmente, wie sie von den Firmen Hoechst oder BASF angeboten werden.

8. Aerosollack, auch Aerosolfarbe oder Wasserfarbe genannt, dadurch gekennzeichnet, dass er eine Mischung nach einem der Ansprüche 1 bis 7 und Dimethylaether als Treibmittel enthält.

9. Aerosollack nach Anspruch 8, dadurch gekennzeichnet, dass auf 60 bis 70 Gewichtsteile genannter Mischung 40 bis 30 Gewichtsteile Dimethylaether verwendet werden.

10. Aerosollack nach einem der Ansprüche 8 bis 9, dadurch gekennzeichnet, dass er in Aerosoldosen enthalten, d.h. abgepackt, ist.

## Claims

1. Mixture for a water containing aerosol lacquer, also named aerosol paint or water paint, characterized in that it contains the following components:
- at least one with water dilutable alkyd resin having a pH-value from 8 to 9,
- at least one wetting agent,
- at least one with water not miscible, thus insoluble in water apolar organic solvent in such a quantity, that this (these) solvent(s) serve(s) simultaneously also as antifoaming agent and is selected from the group, consisting of an aliphatic compound and an aromatic compound,
- at least one pigment,
- at least one drying agent for said alkyd resin, and
- water.

2. Mixture according to claim 1, characterized in that said components are present in the following quantities:
- 10 to 40 % by weight, especially 20 to 25 % by weight, of alkyd resin,
- 0,2 to 0,5 % by weight of wetting agent,
- 2 to 10 % by weight, especially 7 % by weight, of solvent,
- 10 to 30 % by weight, especially 15 % by weight, of pigment,
- 0,05 to 0,5 % by weight, especially 0,03 % by weight, of drying agent, preferably Co-, Ca- or Zr-compounds, such as Co-naphthinates, and
- 40 to 70 % by weight, especially 50 to 60 % by weight, preferably 60 % by weight, of water,
referred respectively to the total weight of the mixture.

3. Mixture according to one of claims 1 to 2, characterized in that it contains additionally the following components:
- at least one antiskinning agent, preferably in a quantity from 0,1 to 0,2 % by weight, and/or
- at least one anti-settling agent, e.g. kieselguhr, preferably in a quantity from 0,3 to 0,5 % by weight, and/or
- at least one acrylic thickening agent, preferably in a quantity from 0,3 to 0,5 % by weight, and/or
- at least one filler, e.g. barium sulfate, calcium carbonate,
whereby the percentages are referred to the total weight of the mixture.

4. Mixture according to one of claims 1 to 3, characterized in that said pH-value of the alkyd resins is adjusted with the assistance of ammonia or amines, such as triethylamine, dimethylethanolamine.

5. Mixture according to one of claims 1 to 4, characterized in that the wetting agent is lecithin or a lecithin containing material or a further commercially available wetting agent.

6. Mixture according to one of claims 1 to 5, characterized in that the insoluble in water, apolar organic solvent, which serves simultaneously also as antifoaming agent, is selected from the group, consisting of gasoline, solvent naphtha and trimethylbenzene.

7. Mixture according to one of claims 1 to 6, characterized in that the pigment is TiO₂, carbon black or a varicolored, organic pigment, such as azopigments or diazopigments, as they are offered by the firms Hoechst or BASF.

8. Aerosol lacquer, also named aerosol paint or water paint, characterized in that it contains a mixture according to one of claims 1 to 7 and dimethyl ether as propellant.

9. Aerosol lacquer according to claim 8, characterized in that there are used for 60 to 70 parts by weight of said mixture 40 to 30 parts by weight of dimethyl ether.

10. Aerosol lacquer according to one of claims 8 to 9, characterized in that it is contained, i.e. packed, in aerosol cans.

## Revendications

1. Mélange pour vernis aqueux en aérosol, appelé également peinture en aérosol ou peinture aqueuse, caractérisé en ce qu'il contient les composants suivants:
- au moins une résine alkyde diluable dans l'eau qui présente un pH de 8 à 9,
- au moins un agent mouillant,
- au moins un solvant organique apolaire non miscible avec l'eau donc insoluble dans l'eau, dans une quantité telle que ce solvant sert simultanément d'agent antimousse et est choisi dans le groupe se composant d'un composé aliphatique et d'un composé aromatique,
- au moins un pigment,
- au moins un siccatif pour la résine alkyde précitée, et
- de l'eau.

2. Mélange selon la revendication 1, caractérisé en ce que les composants cités sont présents dans les quantités suivantes:
- 10 à 40 % en poids, en particulier 20 à 25 % en poids, de résine alkyde,
- 0,2 à 0,5 % en poids d'agent mouillant,
- 2 à 10 % en poids, en particulier 7 % en poids de solvant,
- 10 à 30 % en poids, en particulier 15 % en poids de pigment,
- 0,05 à 0,5 % en poids, en particulier 0,03 % en poids, siccatif, de préférence des composés Co-, Ca- ou Zr, tels que, par exemple, le Co-naphtinate, et
- 40 à 70 % en poids, en particulier 50 à 60 % en poids, de préférence 60 % en poids d'eau,
par rapport respectivement au poids total du mélange.

3. Mélange selon l'une des revendications 1 à 2, caractérisé en ce qu'il contient en outre les composants suivants:
- au moins un agent antipeaux, de préférence dans une quantité de 0,1 à 0,2 % en poids, et/ou
- au moins un agent antisédiment, p. ex. de la diatomite, de préférence dans une quantité de 0,3 à 0,5 % en poids, et/ou
- au moins un agent épaississant acrylé, de préférence dans une quantité de 0,3 % à 0,5 % en poids et/ou
- au moins une charge, p. ex. du sulfate de baryum ou du carbonate de calcium,
les pourcentages se rapportant au poids total du mélange.

4. Mélange selon l'une quelconque des revendications 1 à 3, caractérisé en ce que le pH cité des résines alkydes est ajusté à l'aide d'ammoniaque ou d'amines, telles que, par exemple, la triéthylamine ou la diméthyléthanolamine.

5. Mélange selon l'une quelconque des revendications 1 à 4, caractérisé en ce que l'agent mouillant est de la lécithine ou une substance contenant de la lécithine ou un autre agent mouillant du commerce.

6. Mélange selon l'une des revendications 1 à 5, caractérisé en ce que le solvant organique apolaire insoluble dans l'eau servant simultanément d'agent antimousse est choisi dans le groupe se composant d'essence, de white-spirit et de triméthylbenzène.

7. Mélange selon l'une quelconque des revendications 1 à 6, caractérisé en ce que le pigment TiO₂ est de la suie ou un pigment organique coloré, tel que, par exemple, les pigments azoïques ou les pigments diazoïques comme proposés par les firmes Hoechst ou BASF.

8. Vernis en aérosol, appelé également peinture en aérosol ou peinture aqueuse, caractérisé en ce qu'il contient un mélange selon l'une quelconque des revendications 1 à 7 et du diméthyléther comme agent propulseur.

9. Vernis en aérosol selon la revendication 8, caractérisé en ce que, pour 60 à 70 parts en poids du mélange cité, sont utilisées 40 à 30 parts en poids de diméthyléther.

10. Vernis en aérosol selon l'une des revendications 8 à 9, caractérisé en ce qu'il est contenu, c'est-à-dire conditionne, dans des bombes aérosol.
